# EUROPÄISCHE PATENTANMELDUNG

(11) **EP 3 892 907 A1**
(43) Veröffentlichungstag der Anmeldung: **13.10.2021**
(21) Anmeldenummer: 20168327.3
(22) Anmeldetag: 06.04.2020
(51) Int. Cl.: F16M 1/00, B23K 26/00, B23Q 1/01, F16M 7/00

(54) **MASCHINENRAHMEN FÜR EINE WERKZEUGMASCHINE UND WERKZEUGMASCHINE**

(71) Anmelder: Bystronic Laser AG, 3362 Niederönz (CH)
(72) Erfinder: Kähr, Christian, 5034 Suhr (CH); Lanz, Ueli, 3355 Inkwil (CH); Bürgi, Fabian, 3185 Schmitten (CH)
(74) Vertreter: Fink Numrich Patentanwälte PartmbB

(57) **Zusammenfassung**

Maschinenrahmen (100) für eine Werkzeugmaschine aufweisend
- zwei in einer ersten Richtung (X) verlaufende Längsträger (101) und zwei in einer zweiten, quer zur ersten Richtung (X) verlaufenden, Richtung (Y) verlaufende und die Längsträger (101) verbindende Querträger (102), wobei die Längs- und Querträger (101, 102) einen Bearbeitungsraum (103) für die Werkzeugmaschine (200) definieren,
- mindestens vier erste Bodenbefestigungseinheiten (104) zur überwiegenden Übertragung von Kräften in erster Richtung (X) in ein Fundament, wobei die ersten Bodenbefestigungseinheiten (104) an Enden der Längsträger (101) befestigt sind, und
- mindestens zwei zweite Bodenbefestigungseinheiten (105) zur überwiegenden Übertragung von Kräften in zweiter Richtung (Y) in ein Fundament, wobei die zweiten Bodenbefestigungseinheiten (105) an mindestens einem der Längsträger (101) in dessen mittleren Bereich befestigt sind, wobei
ein, vorzugsweise genau ein, Längsträger (101) mit den zweiten Bodenbefestigungseinheiten (105) eine Querschnittsgeometrie zur überwiegenden Kraftabtragung in zweiter Richtung (Y) aufweist.

## Beschreibung

Die Erfindung betrifft einen Maschinenrahmen für eine Werkzeugmaschine und eine Werkzeugmaschine mit einem Maschinenrahmen. Insbesondere betrifft die Erfindung einen einen Maschinenrahmen für eine Werkzeugmaschine nach Anspruch 1 und eine Werkzeugmaschine nach Anspruch 10.

Eine Werkzeugmaschine dient zur Herstellung und Bearbeitung von Werkstücken unter Verwendung von Werkzeugen. Als Werkzeugmaschinen werden hier beispielsweise Laserbearbeitungsmaschinen, insbesondere Laserschneidmaschinen zum Schneiden von plattenförmigen oder zylinderförmigen Werkstücken angesehen. Im Folgenden wird aus Gründen der Übersichtlichkeit auf Laserschneidmaschinen Bezug genommen.

Alle bekannten Maschinerahmen haben Bodenbefestigungen, welche den Rahmen in einer ersten, X-, und einer zweiten, Y-, Richtung fixieren. Dabei werden mehrere dieser Bodenbefestigungen am Rahmen angebracht. In X Richtung übertragen alle Bodenbefestigungen Kräfte in Fundament egal an welcher Position die Maschine gerade schneidet. In Y Richtung hingegen übertragen die Kräfte vorwiegend diese Bodenbefestigungen wo sich die Brücke der Maschine gerade befindet. Dies ist durch die lange schmale Form der Seitenteile gegeben.

Bei kurzen Maschinen, welche weniger Bodenbefestigungen habe, ist oft die Fixierung in X Richtung nicht ausreichend. Bei sehr langen Maschinen sind die Bodenbefestigungen in X Richtung dann aber überdimensioniert.

Der Erfindung liegt nun die Aufgabe zugrunde, die Nachteile des Standes der Technik zu vermeiden und einen verbesserten Maschinenrahmen für eine Werkzeugmaschine beziehungsweise eine verbesserte Werkzeugmaschine bereitzustellen.

Diese Aufgabe wird gelöst durch einen Maschinenrahmen für eine Werkzeugmaschine nach Anspruch 1 beziehungsweise eine Werkzeugmaschine nach Anspruch 10.

Der Maschinenrahmen für eine Werkzeugmaschine umfasst zwei in einer ersten Richtung verlaufende Längsträger und zwei in einer zweiten, quer zur ersten Richtung verlaufenden, Richtung verlaufende und die Längsträger verbindende Querträger, wobei die Längs- und Querträger einen Bearbeitungsraum für die Werkzeugmaschine definieren,
- mindestens zwei vier ersten Bodenbefestigungseinheiten zur überwiegenden Übertragung von Kräften in erster Richtung in ein Fundament, wobei die ersten Bodenbefestigungseinheiten an Enden der Längsträger befestigt sind, und
- mindestens zwei zweite Bodenbefestigungseinheiten zur überwiegenden Übertragung von Kräften in zweiter Richtung in ein Fundament, wobei die zweiten Bodenbefestigungseinheiten an mindestens einem der Längsträger in dessen mittleren Bereich befestigt sind, wobei
   ein, vorzugsweise genau ein, Längsträger mit den zweiten Bodenbefestigungseinheiten eine Querschnittsgeometrie zur überwiegenden Kraftabtragung in zweiter Richtung aufweist.

Der Längsträger hat üblicherweise eine längere Erstreckung als der Querträger, so dass ein rechteckiger Bearbeitungsraum aufgespannt wird. Möglich ist auch ein quadratischer Bearbeitungsraum mit gleich langen Längsträgern und Querträgern. Allgemein können die Längsträger und Querträger als erste und zweite Träger bezeichnet werden, die in einer ersten und zweiten Richtung verlaufen. Die erste oder X-Richtung und zweite oder Y-Richtung bilden eine horizontale Ebene.

Bei Laserschneidmaschinen zum Beispiel mit geringerer Laserleistung kann der Maschinenrahmen im Bearbeitungsraum zusätzliche, innere Querträger aufweisen. Der Begriff Bearbeitungsraum umfasst hier sowohl freie Bearbeitungsräume, das heißt ohne innere Querträger, als auch Bearbeitungsräume mit einem oder mehreren inneren Querträgern.

Der Maschinenrahmen ist für eine Ableitung der Kräfte auf Füße oder Bodenbefestigungen optimiert, insbesondere in Y-Richtung. Die beiden unterschiedlichen Bodenbefestigungseinheiten dienen zur überwiegenden Übertragung von Kräften und/oder Momenten in eine Vorzugsrichtung (X, Y) in ein Fundament beziehungsweise den Boden und sind somit ausgelegt für eine möglichst steife Fixierung in spezifischer Richtung. Die überwiegende Übertragung oder Kraftabtragung bedeutet, dass mehr als 50%, vorzugsweise mehr als 80%, höchst vorzugsweise größer gleich 90% der Kräfte in die spezifische Richtung (X, Y) übertragen werden. Gleichzeitig können Kräfte in die andere Richtung (Y, X) in geringerem Umfang, zum Beispiel 10% bis zu 20%, übertragen werden. Insbesondere bei einer überwiegenden Übertragung von größer gleich 90%, das heißt bei nur noch einem Anteil der anderen Kraft von 10 oder weniger Prozent, können die Bodenbefestigungseinheiten stark auf die jeweilige Kraft optimiert werden. Dies ermöglicht einen optimierten Aufbau des gesamten Maschinenrahmens. Auch ein Drehmoment um die erste, X-Richtung wird überwiegend von den zweiten Bodenbefestigungseinheiten aufgenommen. Für das Drehmoment bedeutet der Begriff überwiegend, dass mehr als 80%, vorzugsweise größer gleich 85% der Momente um die spezifische X-Richtung von den zweiten, Y-Bodenbefestigungseinheiten übertragen werden.

Der erfindungsgemäße Maschinenrahmen für eine Werkzeugmaschine hat den Vorteil, dass die Teilegenauigkeit der Werkzeugmaschine erhöht werden kann, da die Steifigkeit des Maschinenrahmens selber und dessen Bodenbefestigung einen erheblichen Einfluss auf die Teilegenauigkeit haben. Des Weiteren vermeidet die erhöhte Steifigkeit eine Limitierung der maximalen Regelverstärkung, die sonst zu Resonanzproblemen und Vibrationen führen kann.

Bei unebenem Untergrund kann durch die Struktur des Maschinenrahmens verhindert werden, dass hohe Spannungen auf den Maschinenrahmen gebracht werden und dieser bei dem Verschrauben im Boden verzogen wird. Ebenso kann das Problem minimiert werden, wenn ein Maschinenrahmen nach der Montage nicht die geforderte Geradheit hat. Dann müsste dieser durch Vorrichtungen in die richtige Position gedrückt werden.

Es kann vorgesehen sein, dass der Längsträger mit den zweiten Bodenbefestigungseinheiten eine Querschnittsgeometrie mit einem dreieckförmigen Querschnitt aufweist. Eine derartige Querschnittsgeometrie ist durch eine Verbreiterung der Basis des Längsträgers besonders gut geeignet, Kräfte vorzugsweise in die spezifische zweite oder X-Richtung abzuleiten.

Es kann ferner vorgesehen sein, dass die Querschnittsgeometrie einen dreieckförmigen Querschnitt mit einem abgewinkeltem Außenblech und/oder einem abgewinkeltem Innenblech aufweist und dass ein Flächenelement kraftschlüssig in den Querschnitt eingesetzt ist. Dieser Aufbau stellt ein maximales Flächenträgheitsmoment und somit maximale Steifigkeit zur Verfügung. Das Ergibt zudem ein geschlossenes Profil für optimale Torsionssteifigkeit. Die Schräge des Außenblechs und/oder des Innenblechs kann einen Winkel zwischen 15 und 45 Grad zur Senkrechten (Z-Richtung) aufweisen. Die Schräge kann über die ganze Länge oder nur an Stellen wo höhere Kräfte auftreten ausgeführt sein. Es kann vorgesehen sein, dass zwischen dem Innenblech und dem Außenblech wenigstens ein Flächenelement strukturversteifend angeordnet ist. Ein derartiges Flächenelement erlaubt eine maximale Steifigkeit und eine optimale Torsionssteifigkeit.

Es kann ferner vorgesehen sein, dass die zweite Bodenbefestigungseinheit eine in dem Bearbeitungsraum angeordnete innere Bodenbefestigung und eine außerhalb des Bearbeitungsraums angeordnete äußere Bodenbefestigung aufweist, wobei das Flächenelement die beiden Bodenbefestigungen verbindendet und wobei die Bodenbefestigungen und das Flächenelement in einer Ebene senkrecht zu dem Längsträger angeordnet sind. Dieser Aufbau der Y-Bodenbefestigung erlaubt eine optimale Kraftübertragung. Das Flächenelement ist ein vollflächiges Element wie eine Platte oder Rippe und erstreckt sich in der Ebene.

Es kann vorgesehen sein, dass die Bodenbefestigung an einen an dem Längsträger verschraubbaren Schenkel aufweist. Die Schraubverbindung erlaubt eine einfachere Herstellung und Handhabung.

Es kann ferner vorgesehen sein, dass die Bodenbefestigung an einem Schenkel des Flächenelements angeordnet ist, wobei der Schenkel aus dem Längsträger vorsteht. Die Verlängerung des Flächenelements über die Außenfläche des Längsträgers hinaus kann die Steifigkeit weiter erhöhen.

Es kann vorgesehen sein, dass der Schenkel über zwei Langlöcher und entsprechende Schraubverbindungen mit einem an dem Fundament befestigbaren Bodenelement verbunden ist. Durch die in einem Teil ausgebildeten Langlöcher, vorzugsweise in Z-Richtung, kann die Höhe eingestellt werden. Diese Verbindung erlaubt weiter, dass der Winkel (um X) eingestellt werden kann, wodurch Bodenunebenheiten ausgeglichen werden können. Der Winkel um Y muss nicht gesondert eingestellt werden können, da die Schenkel aufgrund relativ elastischer Eigenschaften (Dicke der Schenkel dünn im Vergleich zu der Größe des Maschinenrahmens) eine gewisse Verdrehung um Y erlauben.

Es kann ferner vorgesehen sein, dass an beiden Seiten des Schenkels Stellschrauben in Anlage an einem an dem Fundament befestigbaren Bodenelement, welches an dem Schenkel befestigt ist, vorgesehen sind. So kann der äußere Schenkel zwei Schrauben umfassen, welche den Längsträger zum Ausrichten in beide Richtungen drücken können. Die beiden Stellschrauben können links und recht der Hauptfläche des Schenkels angeordnet sein oder anders ausgedrückt, in Y-Richtung verlaufen und wirken.

Eine erfindungsgemäße Werkzeugmaschine ist eingerichtet zur Bearbeitung von Werkstücken in einem Bearbeitungsraum und umfasst einen Maschinenrahmen wie zuvor beschrieben. Es gelten die gleichen Vorteile und Modifikationen wie zuvor beschrieben. Die Anzahl der ersten oder X-Bodenbefestigungen kann für alle Maschinengrößen gleich sein, weil die Kraft in X immer an gleicher Y Stelle auftritt und der Längsträger in sich in X Richtung sehr steif ist. Die Anzahl und/oder Position der zweiten oder Y-Bodenbefestigungen kann anhand der Maschinengröße und/oder der berechneten Momente und Kräfte definiert werden. Der Abstand zwischen 2 zweiten oder Y-Bodenbefestigungen beträgt zum Beispiel 1000 -1500mm.

Es kann vorgesehen sein, dass die Werkzeugmaschine eine in dem Bearbeitungsraum in erste oder X-Richtung und zweite oder Y-Richtung verfahrbares Portalelement aufweist. Gerade bei verfahrbaren Brücken oder Portalen entstehen dynamische Momente und Kräfte, die durch den hier vorgeschlagenen Maschinenrahmen beziehungsweise die Werkzeugmaschine sehr gut aufgenommen werden können, was die Teilegenauigkeit verbessert.

Es kann ferner vorgesehen sein, dass die Werkzeugmaschine eine Laserbearbeitungsmaschine ist und dass das Portalelement ein an einer Brücke angeordneter Laserschneidkopf ist. Bei der Laserbearbeitung, zum Beispiel dem Laserschneiden, ist eine hohe Genauigkeit und Präzision gefordert. Der Maschinenrahmen beziehungsweise die Werkzeugmaschine kann ebendies durch die Steifigkeit des Maschinenrahmens selber und dessen Bodenbefestigung garantieren.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine Draufsicht eines Maschinenrahmens für eine Werkzeugmaschine;
- Figur 2: eine perspektivische Schnittdarstellung eines Längsträgers des Maschinenrahmens;
- Figur 3: eine perspektivische Ansicht eines Schenkels mit Bodenbefestigung;
- Figur 4: eine Draufsicht des Schenkels mit Bodenbefestigung; und
- Figur 5: eine perspektivische Ansicht einer Werkzeugmaschine mit einem Maschinenrahmen.

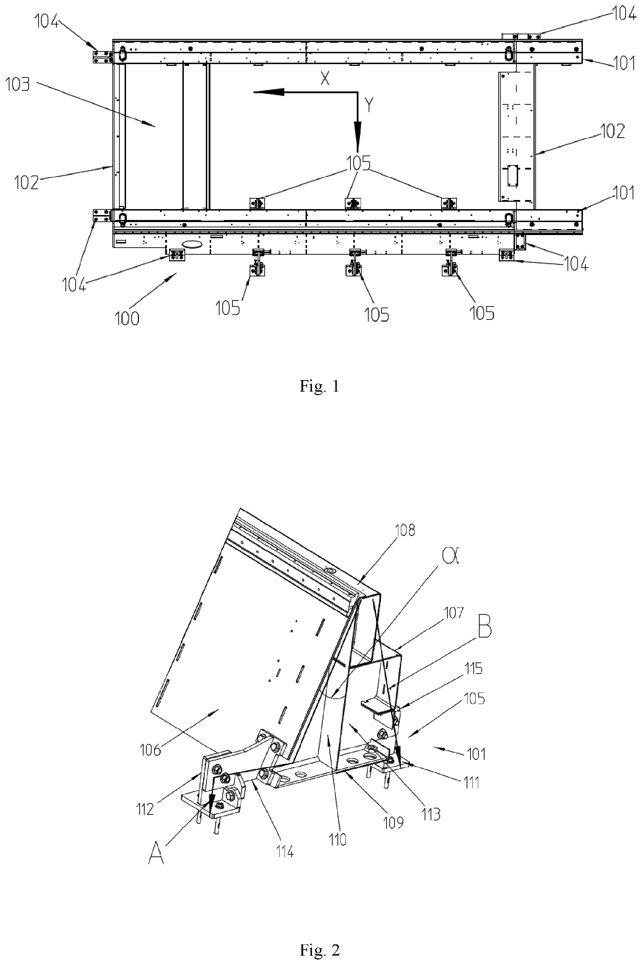

Figur 1 zeigt eine Draufsicht eines Maschinenrahmens 100 für eine Werkzeugmaschine. Der Maschinenrahmen 100 hat zwei parallel, in einer ersten oder X-Richtung verlaufende Längsträger 101. Die beiden Längsträger 101 sind in ihren Endbereichen jeweils über einen Querträger 102 verbunden, wobei sich die Querträger 102 in eine zweite oder Y-Richtung erstrecken. Die vier Träger spannen in der X-Y-Ebene einen Bearbeitungsraum 103 für die Werkzeugmaschine auf. Im folgenden werden aus Gründen der Übersicht die Koordinaten X für die erste Richtung und Y für die zweite Richtung verwendet.

Der Maschinenrahmen 100 bildet die Basis für eine Werkzeugmaschine zum Beispiel in Form einer Laserschneidmaschine. Anhand von Figur 6 ist folgend eine Werkzeugmaschine mit einem Maschinenrahmen 100 beschrieben.

Der Maschinenrahmen 100 umfasst mindestens zwei X-Bodenbefestigungseinheiten 104 zur überwiegenden Übertragung von Kräften und/oder Momenten in X-Richtung in ein Fundament, wie zum Beispiel einen Fabrikboden. Vier der X-Bodenbefestigungseinheiten 104 sind in Endbereichen der Längsträger 101 befestigt. Die X-Bodenbefestigungseinheiten 104 sind vorzugsweise nahe der Krafteinleitung im Bereich der Querträger 102 angeordnet. Weitere X-Bodenbefestigungseinheiten 104 können in mittleren Bereichen und/oder in den Endbereichen der Längsträger 101 angeordnet sein.

Der Maschinenrahmen 100 umfasst weiter mindestens zwei Y-Bodenbefestigungseinheiten 105 zur überwiegenden Übertragung von Kräften und/oder Momenten in Y-Richtung in ein Fundament, wobei die Y-Bodenbefestigungseinheiten 105 an mindestens einem der Längsträger 101 in dessen mittleren Bereich befestigt sind. Die Y-Bodenbefestigungseinheiten 105 sind vorzugsweise in einem Bearbeitungsbereich oder Schneidbereich der Werkzeugmaschine angeordnet. Die Y-Bodenbefestigungseinheiten 105 sind vorzugsweise nur an einem der Längsträger 101 befestigt; nur dieser Längsträger 101 hat eine Festlage, während der zweite Längsträger 101 dann elastisch verbunden ist. In der Darstellung der Figur 1 hat der untere Längsträger 101 eine Festlage.

Durch die Bewegung zum Beispiel eines Portals oder einer Brücke mit einem Laserschneidkopf oder ähnlichem entstehen Kräfte und/oder Momente, die über den Maschinenrahmen 100 in das Fundament abgeleitet werden.

Gemäß dem Maschinenrahmen 100 werden diese Kräfte und/oder Momente spezifisch abgeleitet. Das heißt, dass die X-Bodenbefestigungseinheiten 104 hauptsächlich die Kräfte in X-Richtung ableiten, während die Y-Bodenbefestigungseinheiten 105 hauptsächlich die Kräfte in Y-Richtung ableiten. Diese Aufteilung erlaubt ein optimiertes und modulares Design der Werkzeugmaschinen. Vorzugsweise nehmen die Bodenbefestigungseinheiten 104 und 105 mindestens 90 % der jeweiligen Kräfte in die erste (X) oder zweite (Y) Richtung auf.

Figur 2 zeigt eine perspektivische Schnittdarstellung des Längsträgers 101 des Maschinenrahmens 100. Der Längsträger 101 ist mit einer Y-Bodenbefestigungseinheit 105 dargestellt.

Der Längsträger 101 hat eine Querschnittsgeometrie mit einem dreieckförmigen Querschnitt, hier mit einem abgewinkeltem Außenblech 106 und einem stufenförmigen Innenblech 107. Das Innenblech 107 kann aus einem oder mehreren Teilen bestehen und folgt ebenfalls einer abgewinkelten Linie ausgehend von einer Spitze 108 des Längsträgers 101 zu einer Basis 109 des Längsträgers 101. Das Außenblech 106, das Innenblech 107 und die Basis 109 bilden zumindest annähernd ein Dreieck.

Das Außenblech 106 ist vorzugsweise einstückig ausgebildet und verläuft in einem Winkel zwischen 15 und 45 Grad zur Senkrechten (Z-Richtung) beziehungsweise zu einer zentralen, vertikalen Versteifungsrippe 110 des Längsträgers 101.

Die Y-Bodenbefestigungseinheit 105 umfasst beziehungsweise besteht aus einer in dem Bearbeitungsraum angeordneten inneren Bodenbefestigung 111, einer außerhalb des Bearbeitungsraums angeordneten äußeren Bodenbefestigung 112 und ein die beiden Bodenbefestigungen verbindendes Flächenelement 113. Die Bodenbefestigungen und das Flächenelement 113 sind in einer Ebene senkrecht zu dem Längsträger 101 angeordnet. Das Flächenelement 113 ist kraftschlüssig in den Querschnitt des Längsträgers 101 eingesetzt. Das Flächenelement 113 ist vorzugsweise ein Blech und kann als Querrippe bezeichnet werden.

Die äußere Bodenbefestigung 112 umfasst einen an dem Längsträger 101 verschraubbaren Schenkel 114. Der Schenkel 114 erstreckt sich in Y-Richtung und ist im Bereich der Basis 109 des Längsträgers 101 befestigt. Der Schenkel 114 verlängert somit die Basis beziehungsweise Aufstandsfläche des Längsträgers 101.

Die innere Bodenbefestigung 111 ist an einem Schenkel 115 des Flächenelements 113 angeordnet, wobei der Schenkel 115 aus dem Längsträger 101 vorsteht. Auch der Schenkel 115 verlängert somit die Basis beziehungsweise Aufstandsfläche des Längsträgers 101. Sowohl die äußere Bodenbefestigung 112 als auch die innere Bodenbefestigung 111 kann jeweils einen verschraubbaren Schenkel aufweisen oder an einem Schenkel 115 des Flächenelements 113 angeordnet sein.

Die Bodenbefestigungen dienen zur Krafteinleitung von Kräften und/oder Momenten des Längsträgers 101 in ein Fundament beziehungsweise zur Befestigung und zum Halten eines Maschinenrahmens beziehungsweise einer Werkzeugmaschine. Eine Kraft, die im Bereich der Spitze 108 des Längsträgers 101 eingeleitet wird, wird zunächst in zwei Teilkräfte A und B aufgeteilt und dann im Längsträger 101 zu dessen Basis 109 weitergeleitet. Dies geschieht insbesondere durch das Außenblech 106 und das Innenblech 107, aber auch durch das das Flächenelement 113.

Dann werden die beiden Teilkräfte A und B über die Schenkel 114, 115 beziehungsweise die innere Bodenbefestigung 111 und die äußere Bodenbefestigung 112 in ein nicht dargestelltes Fundament abgeleitet.

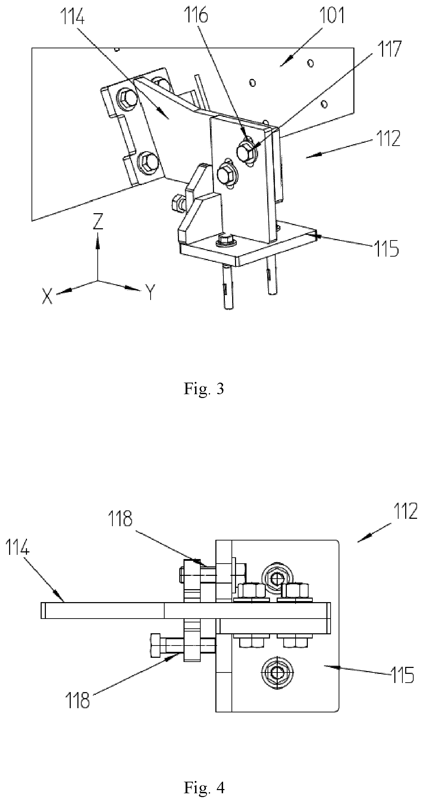

Figur 3 zeigt eine perspektivische Ansicht einer äußeren Bodenbefestigung 112 mit einem Schenkel 114 mit daran befestigtem Bodenelement 115. Das Bodenelement 115 kann an dem Fundament zum Beispiel mit Schrauben und Dübeln befestigt werden.

Der Schenkel 114 und das Bodenelement 115 sind über zwei Langlöcher 116 und entsprechende Schraubverbindungen 117 miteinander befestigt. Die Langlöcher 116 erstrecken sich in der Z-Richtung, so dass eine Einstellung des Maschinenrahmens in der Höhe (Z-Richtung) möglich ist. Diese Verbindung erlaubt weiter, dass zum Ausgleich von Bodenunebenheiten der Winkel um X eingestellt werden kann.

Figur 4 zeigt eine Draufsicht der äußeren Bodenbefestigung 112 mit einem Schenkel 114 mit daran befestigtem Bodenelement 115.

An beiden Seiten des Schenkels 114 sind Stellschrauben 118 in Anlage an dem Bodenelement 115, welches an dem Schenkel befestigt ist 114, vorgesehen. Die beiden Stellschrauben 118 können das Seitenteil zum Ausrichten in beide Richtungen drücken. Dazu kann an dem Bodenelement 115 zum Beispiel ein senkrechter Vorsprung als Gegenlager zu den Stellschrauben 118 ausgebildet sein.

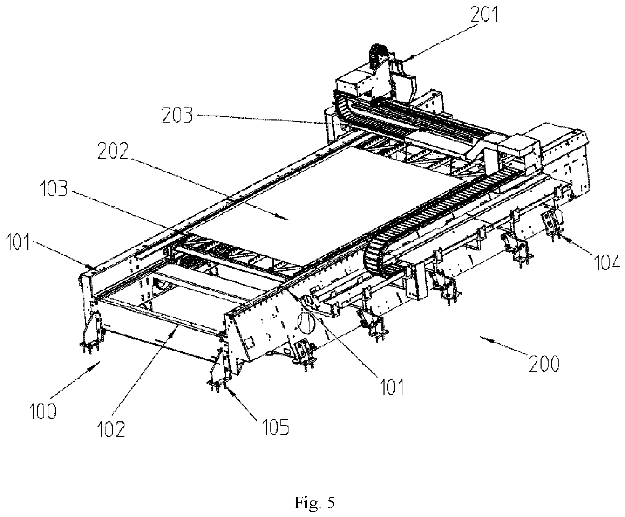

Figur 5 zeigt eine perspektivische Ansicht einer Werkzeugmaschine in Form einer Laserschneidmaschine 200 mit einem Maschinenrahmen 100. Der Maschinenrahmen 100 hat zwei Längsträger 101 und zwei Querträger 102.

Die Laserschneidmaschine 200 umfasst einen Laserschneidkopf 201 eingerichtet zum Schneiden von Teilen aus einem hier plattenförmigen, metallischen Werkstück 202. Dazu wird eine Laserschneidleistung im Bereich von üblicherweise mindestens 1 KW, vorzugsweise größer gleich 3 KW zur Verfügung gestellt. Der Laserschneidkopf 201 ist an einer in dem Bearbeitungsraum 103 in X-Richtung und Y-Richtung verfahrbaren Brücke 203 angeordnet.

In dem Bearbeitungsraum 103 oder Werkstückbereich kann ein Wechseltisch der Laserschneidmaschine 200 zur Aufnahme mindestens eines Werkstücks 202 vorgesehen sein. Der Wechseltisch kann hier dem Bearbeitungsraum entsprechen, beziehungsweise der Bearbeitungsraum der Laserschneidmaschine 200 beziehungsweise des Maschinenrahmens 100 ist durch die Abmessungen der Wechselstation begrenzt.

Die Brücke 203 oder ein Portal kann auf oder an den zwei Längsträgern 101 verfahren. Das verfahrbare Portal kann auf Schienen verfahren, welche an den Längsträgern 101 angebracht sind

Der erfindungsgemäße Maschinenrahmen für eine Werkzeugmaschine hat den Vorteil, dass die Teilegenauigkeit der Werkzeugmaschine erhöht werden kann, da die Steifigkeit des Maschinenrahmens selber und dessen Bodenbefestigung einen erheblichen Einfluss auf die Teilegenauigkeit haben.

## Patentansprüche

1. Maschinenrahmen (100) für eine Werkzeugmaschine aufweisend
- zwei in einer ersten Richtung (X) verlaufende Längsträger (101) und zwei in einer zweiten, quer zur ersten Richtung (X) verlaufenden, Richtung (Y) verlaufende und die Längsträger (101) verbindende Querträger (102), wobei die Längs- und Querträger (101, 102) einen Bearbeitungsraum (103) für die Werkzeugmaschine (200) definieren,
- mindestens vier erste Bodenbefestigungseinheiten (104) zur überwiegenden Übertragung von Kräften in erster Richtung (X) in ein Fundament, wobei die ersten Bodenbefestigungseinheiten (104) an Enden der Längsträger (101) befestigt sind, und
- mindestens zwei zweite Bodenbefestigungseinheiten (105) zur überwiegenden Übertragung von Kräften in zweiter Richtung (Y) in ein Fundament, wobei die zweiten Bodenbefestigungseinheiten (105) an mindestens einem der Längsträger (101) in dessen mittleren Bereich befestigt sind, wobei
ein, vorzugsweise genau ein, Längsträger (101) mit den zweiten Bodenbefestigungseinheiten (105) eine Querschnittsgeometrie zur überwiegenden Kraftabtragung in zweiter Richtung (Y) aufweist.

2. Maschinenrahmen (100) für eine Werkzeugmaschine nach Anspruch 1, **dadurch gekennzeichnet, dass** der Längsträger (101) mit den zweiten Bodenbefestigungseinheiten (105) eine Querschnittsgeometrie mit einem dreieckförmigen Querschnitt aufweist.

3. Maschinenrahmen (100) für eine Werkzeugmaschine nach einem der vorhergehenden Ansprüche, **dadurch gekennzeichnet, dass** die Querschnittsgeometrie einen dreieckförmigen Querschnitt mit einem abgewinkeltem Außenblech (106) und/oder einem abgewinkeltem Innenblech (107) aufweist und dass ein Flächenelement (113) kraftschlüssig in den Querschnitt eingesetzt ist.

4. Maschinenrahmen (100) für eine Werkzeugmaschine nach einem der vorhergehenden Ansprüche, **dadurch gekennzeichnet, dass** zwischen dem Innenblech (106) und dem Außenblech (107) wenigstens ein Flächenelement (113) strukturversteifend angeordnet ist.

5. Maschinenrahmen (100) für eine Werkzeugmaschine nach Anspruch 3 oder 4, **dadurch gekennzeichnet, dass** die zweite Bodenbefestigungseinheit (105) eine in dem Bearbeitungsraum (103) angeordnete innere Bodenbefestigung (111) und eine außerhalb des Bearbeitungsraums angeordnete äußere Bodenbefestigung (112) aufweist, wobei das wenigstens eine Flächenelement (113) die beiden Bodenbefestigungen verbindet und wobei die Bodenbefestigungen und das Flächenelement (113) in einer Ebene senkrecht zu dem Längsträger (101) angeordnet sind.

6. Maschinenrahmen (100) für eine Werkzeugmaschine nach Anspruch 5, **dadurch gekennzeichnet, dass** die Bodenbefestigung (111, 112) einen an dem Längsträger (101) verschraubbaren Schenkel (114) aufweist.

7. Maschinenrahmen (100) für eine Werkzeugmaschine nach Anspruch 5, **dadurch gekennzeichnet, dass** die Bodenbefestigung (111, 112) an einem Schenkel (115) des Flächenelements (113) angeordnet ist, wobei der Schenkel (115) aus dem Längsträger (101) vorsteht.

8. Maschinenrahmen (100) für eine Werkzeugmaschine nach Anspruch 6 oder 7, **dadurch gekennzeichnet, dass** der Schenkel (115) über zwei Langlöcher (116) und entsprechende Schraubverbindungen (117) mit einem an dem Fundament befestigbaren Bodenelement (115) verbunden ist.

9. Maschinenrahmen (100) für eine Werkzeugmaschine nach einem der Ansprüche 6 bis 8, **dadurch gekennzeichnet, dass** an beiden Seiten des Schenkels (114) Stellschrauben (118) in Anlage an einem an dem Fundament befestigbaren Bodenelement (115), welches an dem Schenkel (115) befestigt ist, vorgesehen sind.

10. Werkzeugmaschine eingerichtet zur Bearbeitung von Werkstücken in einem Bearbeitungsraum (103), mit einem Maschinenrahmen (100) nach einem der Ansprüche 1 bis 9.

11. Werkzeugmaschine nach Anspruch 10, **dadurch gekennzeichnet, dass** die Werkzeugmaschine eine in dem Bearbeitungsraum (103) in X-Richtung und Y-Richtung verfahrbares Portalelement aufweist.

12. Werkzeugmaschine nach Anspruch 11, **dadurch gekennzeichnet, dass** die Werkzeugmaschine eine Laserbearbeitungsmaschine (200) ist und dass das Portalelement ein an einer Brücke (203) angeordneter Laserschneidkopf (201) ist.
